# EUROPÄISCHE PATENTANMELDUNG

(11) **EP 2 863 521 A2**
(43) Veröffentlichungstag der Anmeldung: **22.04.2015**
(21) Anmeldenummer: 14003538.7
(22) Anmeldetag: 16.10.2014
(51) Int. Cl.: H02K 7/08, H02K 5/173, F16C 35/06, F16C 27/04

(54) **Elektronisch kommutierter Elektromotor mit vibrations- und geräuscharmer Lagerung**

(30) Priorität: 16.10.2013 DE 202013009150 U
(71) Anmelder: maxon motor ag, 6072 Sachseln (CH)
(72) Erfinder: Stockmann, Dominik, 6060 Sarnen (CH); Lembert, Dirk, 6072 Sachseln (CH); Fluri, Patrick, 8340 Hinwil (CH)
(74) Vertreter: Grünecker Patent- und Rechtsanwälte PartG mbB

(57) **Zusammenfassung**

Die Erfindung betrifft einen elektronisch kommutierten Elektromotor mit einer Rotorwelle und zumindest einem Wälzlager zur Lagerung der Rotorwelle, wobei das Wälzlagers einen mit der Rotorwelle verbundenen ersten Lagerring umfasst, und wobei Lagerring und Rotorwelle zumindest teilweise aneinander anliegen. Erfindungsgemäß ist vorgesehen, dass der Durchmesser des Elektromotors kleiner oder gleich 25 mm ist, wobei die Rotorwelle zwei drehfest mit einem vollzylindrischen Rotormagneten verbundene Wellenstummel aufweist, wobei die zwei Wellenstummel jeweils mittels eines Wälzlagers gelagert sind, und wobei jeweils zwischen erstem Lagerring und Wellenstummel ein umlaufender Hohlraum besteht..

## Beschreibung

Die vorliegende Erfindung betrifft einen elektronisch kommutierten Elektromotor nach dem Oberbegriff des Anspruchs 1. Es ist üblich, dass die Rotorwelle eines solchen Elektromotors mittels eines oder mehrerer Kugellager gelagert ist. Die Kugellager können einfach auf die Welle aufgesteckt oder auch auf die Welle aufgepresst sein. Der Presssitz besteht dabei zwischen der Rotorwelle und dem inneren Lagerring des Kugellagers.

Bei Elektromotoren kommt es wie bei allen Maschinen mit rotierenden Teilen im Betrieb zu Vibrationen und dadurch zu einer Geräuschentwicklung, die insbesondere bei schnell drehenden Motoren beträchtlich sein kann. Die Vibrationen resultieren aus Unwuchten, die fertigungsbedingt sind und nicht vollständig vermieden werden können. Um die Geräuschentwicklung zu minimieren, versucht man jedoch, die Teile der Rotorbaugruppe möglichst präzise zu fertigen und auszuwuchten. Insbesondere bei den verwendeten Kugellagern bzw. Wälzlagern kommt es auf eine präzise Fertigung an, um die Geräuschentwicklung in Grenzen zu halten.

Selbst eine präzise Fertigung der Rotorbauteile und ein Auswuchten des fertig montierten Rotors können insbesondere bei hohen Drehzahlen von 20.000 U/min oder mehr nicht verhindern, dass Vibrationen erzeugt werden. Es gab daher bereits Bestrebungen, die Vibrationen durch eine geeignete konstruktive Ausgestaltung der Lageranordnung weiter zu reduzieren.

Beispielsweise ist aus DE 10 2005 012083 A1 eine Lageranordnung gemäß dem Oberbegriff des Anspruchs 1 bekannt, bei der zwischen der Rotorwelle und dem inneren Lagerring des Wälzlagers ein mit Flüssigkeit gefüllter elastischer Schlauch angeordnet ist. Durch den Schlauch soll eine Reduzierung von Geräuschen und von axialen sowie radialen Schwingungen des Lagers und der Rotorwelle erreicht werden. Eine ähnliche Maßnahme zur Reduzierung der Vibrationen bzw. Geräusche ist aus DE 10 2005 006210 A1 bekannt. Anstatt eines mit Flüssigkeit gefüllten Schlauchs werden hier zwischen Rotorwelle und Lagerring harte Partikel eingebracht, deren Härte die der Rotorwelle und des Lagerrings übersteigt.

Die aus DE 10 2005 012083 A1 und DE 10 2005 006210 A1 bekannten Maßnahmen zur Reduzierung der Vibrationen sind erstens relativ aufwändig und erschweren zweitens eine exakte Positionierung des Lagers auf der Rotorwelle. Beide Maßnahmen sind zudem relativ teuer und zeigen nicht immer den gewünschten Erfolg.

Des Weiteren sind die bekannten Maßnahmen für Elektromotoren mit einem besonders kleinen Durchmesser ungeeignet, da sich diese Maßnahmen nicht auf die nötigen Abmessungen skalieren lassen.

Es ist daher Aufgabe der vorliegenden Erfindung, für den eingangs genannten Elektromotor eine möglichst einfache, effektive und kostengünstige Maßnahme zur Reduzierung der im Betrieb auftretenden Vibrationen und der dadurch erzeugten Geräusche anzugeben. Die Aufgabe wird gelöst durch die Merkmale des unabhängigen Anspruchs 1. Demnach liegen Lagerring und Rotorwelle nicht über die gesamte Breite des Lagerrings aneinander an, sondern es besteht zumindest an einer Stelle ein sich in Umfangsrichtung erstreckender hohler Bereich. Durch den umlaufenden Hohlraum wird die Übertragung von auftretenden Schwingungen und Vibrationen von der Rotorwelle auf den Lagerring oder anders herum gedämpft. Der Hohlraum kann beispielsweise mit Luft gefüllt sein.

Die Lagerung kommt erfindungsgemäß bei elektronisch kommutieren Elektromotoren mit einem Durchmesser kleiner oder gleich 25 mm zum Einsatz. Die Rotorwelle des elektronisch kommutierten Elektromotors ist dabei beidseitig gelagert. Sie weist zwei drehfest mit einem vollzylindrischen Rotormagneten verbundene Wellenstummel auf.

Die Erfindung eignet sich insbesondere bei Elektromotoren mit Wälzlagern, die auf die Rotorwelle aufgepresst werden. Die durch die Erfindung bewirkte Vibrationsdämpfung hat zusätzlich den Vorteil, dass Wälzlager mit reduzierter radialer Lagerluft eingesetzt werden können, wodurch das Radialspiel des Lagers verringert wird. Dies ist insbesondere bei kleinen, schnell drehenden Elektromotoren interessant.

Die Lagerung des erfindungsgemäßen Elektromotors kann besonders einfach und kostengünstig realisiert werden. Im Gegensatz zu den bereits aus dem Stand der Technik bekannten Maßnahmen zur Reduzierung der im Betrieb auftretenden Vibrationen bzw. Geräusche ist es nicht erforderlich, zusätzliche Elemente zwischen Lager und Rotorwelle einzubringen. Der erfindungsgemäß vorgesehene umlaufende Hohlraum kann auf einfache Weise durch entsprechende geometrische Ausgestaltung von Rotorwelle und/oder Lagerring umgesetzt werden. Die Erfindung eignet sich sowohl für außen gelagerte Rotorwellen als auch für innen gelagerte Hohlwellen. Im ersten Fall besteht der umlaufende Hohlraum zwischen der Rotorwelle und dem inneren Lagerring des Wälzlagers, im zweiten Fall zwischen dem äußeren Lagerring des Wälzlagers und dem Innenumfang der Hohlwelle. Vorzugsweise kommen Kugellager zum Einsatz. Es können aber auch andere Wälzlager, wie zum Beispiel Nadellager, eingesetzt werden.

Vorteilhafte Ausgestaltungen der vorliegenden Erfindung sind Gegenstand der Unteransprüche.

Gemäß einer ersten bevorzugten Ausführungsform der vorliegenden Erfindung ist es möglich, den umlaufenden Hohlraum auf einfache Weise durch eine umlaufende Nut der des Wellenstummels zu realisieren. Diese Ausführungsform hat beispielsweise den Vorteil, dass herkömmliche Kugellager eingesetzt werden können. Der entsprechende Lagerring des Kugellagers wird ganz einfach derart über der umlaufenden Nut der Rotorwelle positioniert, dass zwischen Lagerring und Rotorwelle ein Hohlraum entsteht, beispielsweise indem das Lager auf Höhe der Nut auf die Rotorwelle aufgepresst wird.

In einer weiteren ebenfalls bevorzugten Ausführungsform der vorliegenden Erfindung wird der Hohlraum durch eine umlaufende Nut des ersten Lagerrings realisiert. Diese Ausführungsform hat den Vorteil, dass eine Rotorwelle mit durchgehend gleichbleibendem Durchmesser verwendet werden kann. Die Stabilität der Rotorwelle wird dadurch nicht an einer Stelle durch eine umlaufende Nut verringert. Dies ist insbesondere bei sehr kleinen Elektromotoren, sogenannten Mikromotoren, bei welchen der Durchmesser der Rotorwelle ohnehin bereits sehr klein dimensioniert ist, von Vorteil. Es ist jedoch auch möglich, sowohl die Rotorwelle als auch den auf der Rotorwelle positionierten Lagerring mit einer umlaufenden Nut zu versehen.

In einer besonders bevorzugten Ausführungsform der vorliegenden Erfindung weist die Nut einen wannenförmigen Querschnitt mit einem Nutgrund und zwei schräg verlaufenden Seitenwänden auf. Es hat sich gezeigt, dass die Vibrationen dadurch besonders wirksam reduziert werden können.

Vorteilhafterweise kann vorgesehen sein, dass Seitenwände und Nutgrund nahtlos ineinander übergehen und zusammen einen Kreisbogen oder Ellipsenbogen bilden. Als besonders wirksam hat sich dabei herausgestellt, wenn der Kreisbogen oder Ellipsenbogen zu derjenigen Fläche, in der die Nut ausgebildet ist, einen Winkel β kleiner 40°, vorzugsweise zwischen 5° und 30°, einschließt.

Alternativ kann vorzugsweise vorgesehen sein, dass der Nutgrund eben ausgebildet ist und die Seitenwände zum Nutgrund einen Winkel im Bereich von 10° bis 60° einschließen. Eine besonders wirksame Reduzierung der Vibrationen wird erreicht, wenn dieser Winkel etwa 30° beträgt. Vorteilhaft ist es auch, wenn zwischen dem ebenen Nutgrund und den schräg angestellten Seitenwänden jeweils ein Übergangsradius besteht.

Weiter vorzugsweise weist die Nut eine Nuttiefe von 60 bis 400 µm auf. Bei einer Nuttiefe in diesem Bereich wird bereits eine sehr gute Reduzierung der Vibrationen erreicht, gleichzeitig werden die betroffenen Bauteile strukturell nicht signifikant durch die Nut geschwächt.

In einer weiteren, besonders bevorzugten Ausführungsform der vorliegenden Erfindung umfasst das Wälzlager einen konzentrisch zum ersten Lagerring angeordneten zweiten Lagerring und mehrere zwischen erstem Lagerring und zweitem Lagerring angeordnete Wälzkörper. Dabei ist die Nut in axialer Richtung betrachtet vorzugsweise in der Mitte des Wälzlagers angeordnet, so dass sich die Wälzkörper, im Falle eines Kugellagers sind dies die Kugeln, direkt mittig über der Nut befinden. Es hat sich gezeigt, dass die Übertragung der Vibrationen auf diese Weise am wirksamsten unterbunden werden kann. Ganz besonders bevorzugt wird die Nut dabei mindestens so breit ausgeführt wie die Wälzkörper. Von Vorteil ist es, wenn die Nut sogar etwas breiter ist. Beispielsweise kann die Breite der Nut zumindest 110 % der Breite der Wälzkörper betragen.

Für eine wirksame Reduzierung der Vibrationen ist es weiter von Vorteil, wenn die Breite des Nutgrunds mehr als 60 %, und weiter vorzugsweise zwischen 60 % und 100 % der Breite der Wälzkörper beträgt. Dabei wird die beste Dämpfung dann erreicht, wenn die Breite des Nutgrunds in etwa der Breite der Wälzkörper entspricht.

In einer weiteren besonders bevorzugten Ausführungsform der vorliegenden Erfindung ist der erste Lagerring auf den jeweiligen Wellenstummel aufgepresst. Dadurch ergibt sich eine besonders schnelle, präzise und einfache Montage des Lagers. Vorzugsweise wird der Lagerring nicht einzeln, sondern zusammen mit dem fertig montierten Lager auf den Wellenstummel aufgepresst. Sofern der Wellenstummel mit einer umlaufenden Nut versehen ist, kann der Lagerring präzise über der Nut des Wellenstummels positioniert werden. Der Presssitz zwischen Lagerring und Wellenstummel besteht dabei vorzugsweise sowohl vor als auch hinter der Nut. Weiter vorzugsweise ist die Breite der Auflagefläche des Presssitzes vor und hinter der Nut jeweils geringer als die Nutbreite. Dadurch werden besonders wenig Vibrationen übertragen.

In einer weiteren bevorzugten Ausführungsform der vorliegenden Erfindung sind die Wellenstummel mittels einer aus Metall bestehenden und den Rotormagneten umschließenden Hülse mit dem Rotormagneten verbunden. Vorzugsweise umschließt die Hülse sowohl den Rotormagneten als auch, zumindest teilweise, die daran angesetzten Wellenstummel. Weiter vorzugsweise kann vorgesehen sein, dass zwischen Rotormagnet und Hülse ein Presssitz besteht. Ferner sind die Wellenstummel vorzugsweise mit der Hülse verschweißt.

Alternativ können die Wellenstummel auch mit dem Rotormagneten verklebt sein. Diese Ausführungsform kann auch ohne eine den Rotormagneten umschließende Hülse realisiert werden.

Die Erfindung wird im Folgenden anhand von Zeichnungen näher erläutert. Es zeigen:
- Fig. 1: ein erstes Ausführungsbeispiel einer Lageranordnung eines erfindungsgemäßen Elektromotors,
- Fig. 2: ein zweites Ausführüngsbeispiel einer Lageranordnung eines erfindungsgemäßen Elektromotors,
- Fig. 3: ein alternatives Lager für die Lageranordnung aus Fig. 2,
- Fig. 4: einen erfindungsgemäßen elektronisch kommutierten Elektromotor mit einer Lageranordnung gemäß der Ausführungsform aus Fig. 1, und
- Fig. 5: einen erfindungsgemäßen elektronisch kommutierten Elektromotor mit einer Lageranordnung gemäß der Ausführungsform aus Fig. 2.

Für die folgenden Ausführungen gilt, dass gleiche Teile durch gleiche Bezugszeichen bezeichnet sind. Sofern in einer Figur Bezugszeichen enthalten sind, die in der entsprechenden Figurenbeschreibung nicht näher erläutert werden, so wird auf vorangehende oder nachfolgende Figurenbeschreibungen Bezug genommen.

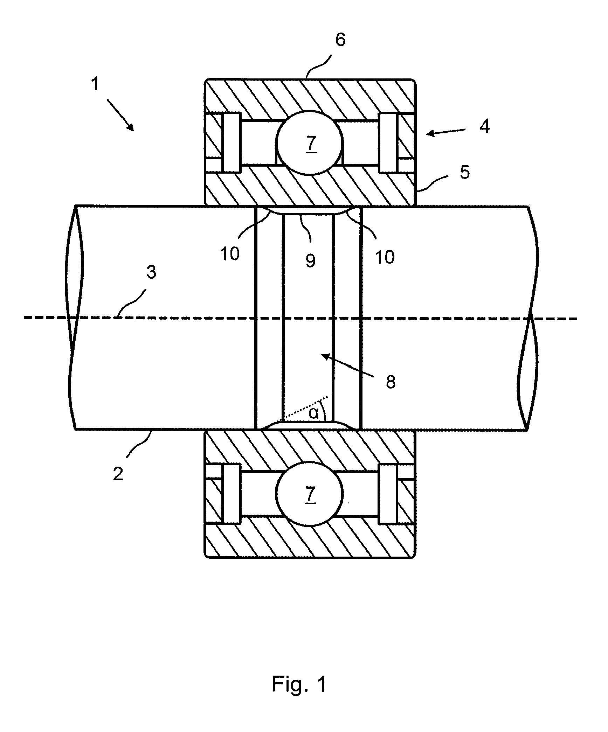

Fig. 1 zeigt eine schematische Darstellung eines ersten Ausführungsbeispiels einer Lageranordnung 1 eines erfindungsgemäßen Elektromotors. Gezeigt ist die Rotorwelle des elektronisch kommutierten Elektromotors zusammen mit einem Kugellager 4 zur Lagerung der Rotorwelle im Elektromotorgehäuse. Das Kugellager 4 ist konzentrisch zur Rotorwelle 2 und dadurch konzentrisch zur Achse 3 der Rotorwelle 2 angeordnet. Bei dem Kugellager handelt es sich um ein herkömmliches Kugellager mit einem inneren Lagerring 5 und einem äußeren Lagerring 6. Zwischen den beiden Lagerringen sind mehrere, in Umfangsrichtung verteilt angeordnete Kugeln 7 vorgesehen, die es ermöglichen, dass sich die beiden Lagerringe gegeneinander drehen können.

Der innere Lagerring 5 ist auf die Rotorwelle 2 aufgepresst, so dass ein Presssitz zwischen den beiden Bauteilen besteht. Allerdings liegt der Lagerring 5 nicht über seine gesamte Breite am Außenumfang der Rotorwelle an. Die Rotorwelle weist im Bereich des Kugellagers eine umlaufende Nut 8 auf, weshalb ein umlaufender Hohlraum zwischen dem inneren Lagerring 5 und der Rotorwelle besteht. Der innere Lagerring 5 überdeckt die Nut beidseitig, und zwar derart, dass das Kugellager 4 mittig über der Nut 8 positioniert ist. Das Kugellager 4 ist symmetrisch aufgebaut, wodurch auch die Kugeln 7 des Lagers direkt mittig über der Nut 8 angeordnet sind.

Fig. 1 zeigt, dass die Nut einen wannenförmigen Querschnitt mit einem ebenen Nutgrund 9 und zwei schräg angestellten Seitenwänden 10 aufweist. Der Nutgrund 9 verläuft dadurch im Wesentlichen parallel zur Achse 3 der Rotorwelle 2. Die beiden Seitenwände schließen zum Nutgrund einen flachen Winkel α von etwa 30° ein. Die Übergänge zwischen Nutgrund und Seitenwänden bzw. zwischen Seitenwänden und Außenumfang der Rotorwelle sind jeweils abgerundet. Es ist deutlich zu erkennen, dass die Nut insgesamt etwas breiter ist als die darüber liegenden Kugeln 7 des Kugellagers. Die Breite der Nut beträgt ungefähr das 1,5-fache des Kugeldurchmessers. Die Breite des Nutgrundes beträgt in etwa 80 % des Kugeldurchmessers. Durch die in der umlaufenden Nut 8 befindliche Luft werden die Vibrationen, die beim Betrieb des Elektromotors auftreten, wirksam abgedämpft. Anders ausgedrückt verhindert die Nut, dass insbesondere im Bereich der Wälzkörper 7 Schwingungen zwischen Rotorwelle 2 und Lagerring 5 übertragen werden.

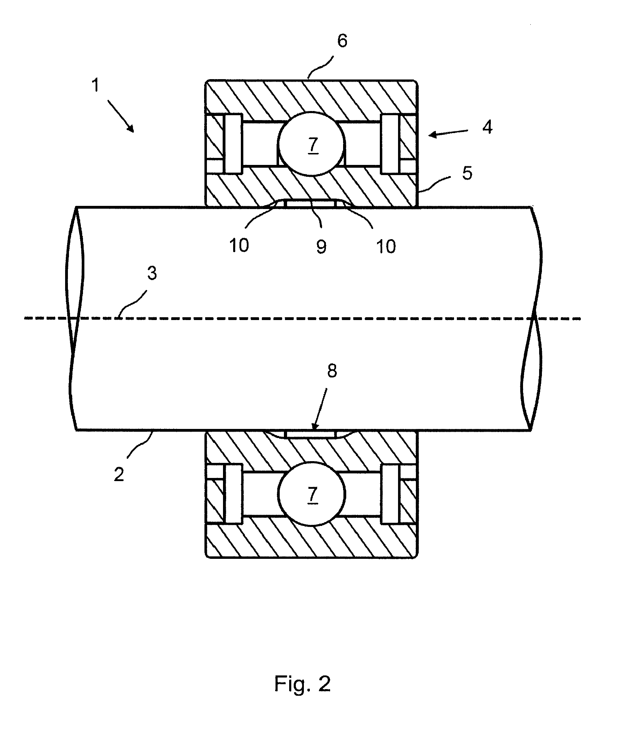

Fig. 2 zeigt eine ähnliche Lageranordnung, wobei die umlaufende Nut bei diesem Ausführungsbeispiel nicht in der Rotorwelle 2, sondern in dem inneren Lagerring 5 des Kugellagers 4 ausgebildet ist. Bei diesem Ausführungsbeispiel. können keine herkömmlichen Kugellager verwendet werden. Gemäß der Erfindung ist hierfür ein spezielles Kugel- bzw. Wälzlager vorgesehen, dessen innerer Lagerring am Innenumfang über eine umlaufende Nut 8 verfügt.

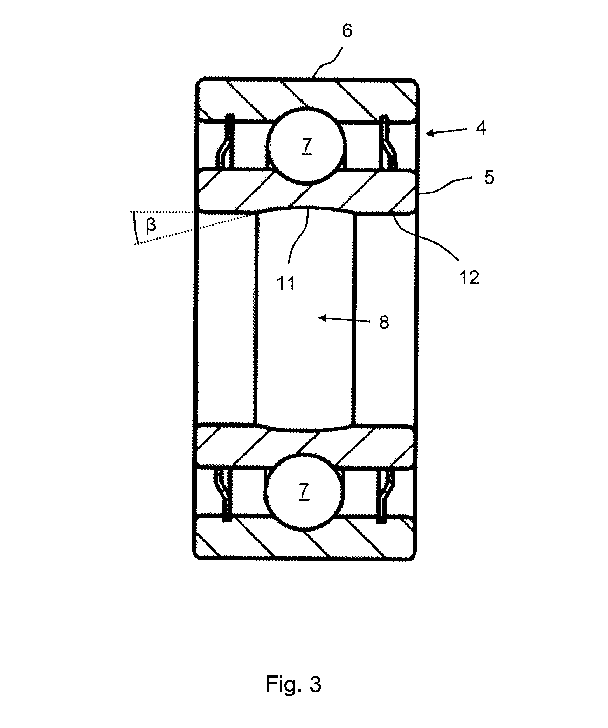

Fig. 3 zeigt ein alternatives Kugellager 4 für die Lageranordnung aus Fig. 2. Bei diesem Ausführungsbeispiel ist am Innenumfang 12 des inneren Lagerrings 4 eine Nut 8 mit einem kreisbogenförmigen Querschnitt ausgebildet. Der Kreisbogen 11 schließt zum Innenumfang 12 einen Winkel von etwa 15° ein. Es wird darauf hingewiesen, dass eine Nut mit dem in Fig. 3 gezeigten Querschnitt alternativ auch in der Rotorwelle ausgebildet sein kann.

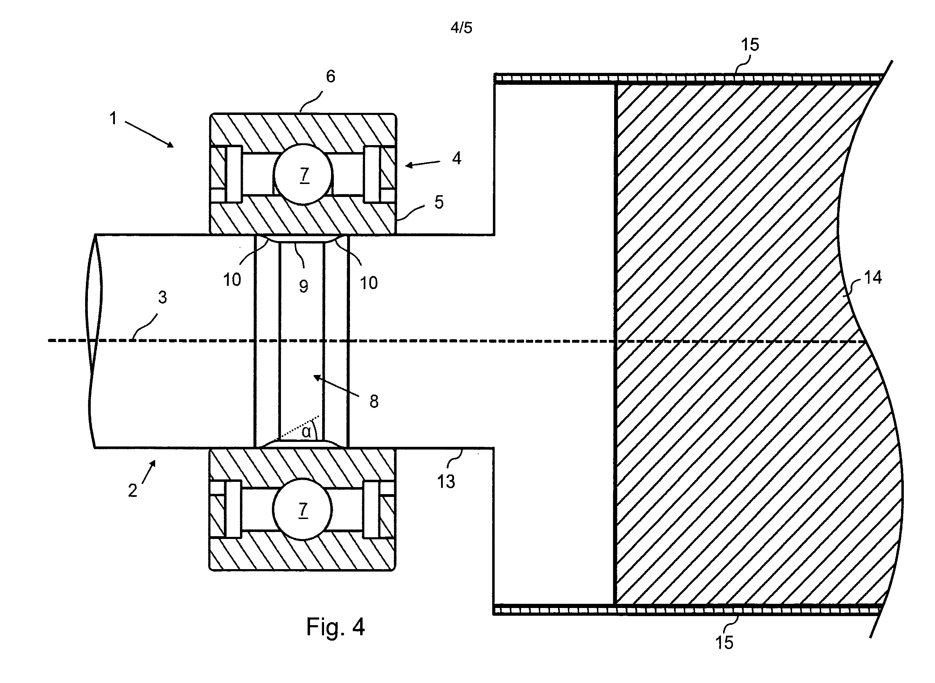

Fig. 4 zeigt die Rotorwelle 2 eines erfindungsgemäßen elektronisch kommutierten Elektromotors mit einer Lageranordnung gemäß Fig. 1. Die Rotorwelle 2 des Elektromotors weist zwei Wellenstummel auf, von denen lediglich ein Wellenstummel 13 dargestellt ist. Der Rotor des Motors weist außerdem einen vollzylindrischen Rotormagneten 14 und eine hohlzylindrische Hülse 15 auf, die konzentrisch zum Rotormagneten 14 angeordnet ist und den Rotormagneten umschließt. Die Hülse 15 besteht aus Metall. Zwischen Hülse und Rotormagnet besteht ein Presssitz. Die Wellenstummel 13 sind an Ihrem Umfang mit der Innenseite der Hülse 15 verschweißt.

Es ist alternativ denkbar, die Wellenstummel 13 mit dem Rotormagneten 14 stirnseitig zu verkleben. Bei dieser Ausführungsform wird keine Hülse 15 benötigt.

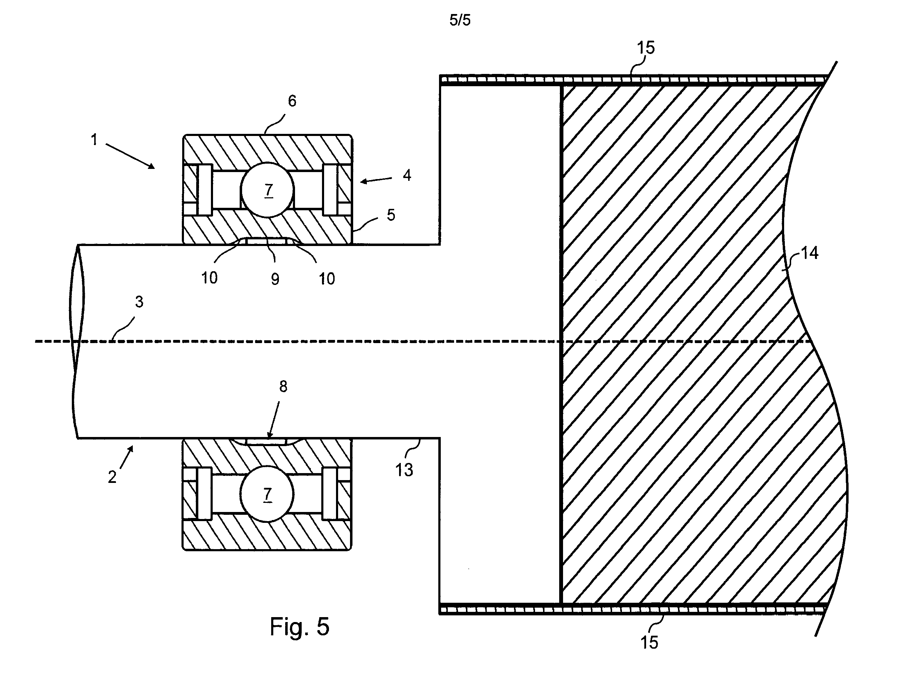

Die Fig. 5 zeigt die Rotorwelle 2 der Fig. 4, jedoch mit einer Lageranordnung gemäß Fig. 2.

## Patentansprüche

1. Elektronisch kommutierter Elektromotor mit einer Rotorwelle (2) und zumindest einem Wälzlager (4) zur Lagerung der Rotorwelle (2), wobei das Wälzlagers (4) einen mit der Rotorwelle (2) verbundenen ersten Lagerring (5) umfasst, wobei Lagerring (5) und Rotorwelle (2) zumindest teilweise aneinander anliegen, **dadurch gekennzeichnet, dass** der Durchmesser des Elektromotors kleiner oder gleich 25 mm ist, wobei die Rotorwelle (2) zwei drehfest mit einem vollzylindrischen Rotormagneten (14) verbundene Wellenstummel (13) aufweist, wobei die zwei Wellenstummel (13) jeweils mittels eines Wälzlagers (4) gelagert sind, und wobei jeweils zwischen erstem Lagerring (5) und Wellenstummel (13) ein umlaufender Hohlraum besteht.

2. Elektronisch kommutierter Elektromotor nach Anspruch 1, **dadurch gekennzeichnet, dass** der Hohlraum durch eine umlaufende Nut (8) des Wellenstummels (13) realisiert ist.

3. Elektronisch kommutierter Elektromotor nach Anspruch 1 oder 2, **dadurch gekennzeichnet, dass** der Hohlraum durch eine umlaufende Nut (8) des ersten Lagerrings (5) realisiert ist.

4. Elektronisch kommutierter Elektromotor nach Anspruch 2 oder 3, **dadurch gekennzeichnet, dass** die Nut (8) einen wannenförmigen Querschnitt mit einem Nutgrund (9) und zwei schräg verlaufenden Seitenwänden (10) aufweist.

5. Elektronisch kommutierter Elektromotor nach Anspruch 4, **dadurch gekennzeichnet, dass** Seitenwände (10) und Nutgrund (9) nahtlos ineinander übergehen und zusammen einen Kreisbogen (11) oder Ellipsenbogen bilden.

6. Elektronisch kommutierter Elektromotor nach Anspruch 5, **dadurch gekennzeichnet, dass** der Kreisbogen (11) oder Ellipsenbogen zu derjenigen Fläche (12), in der die Nut (8) ausgebildet ist, einen Winkel β kleiner 40°, vorzugsweise zwischen 5° und 30°, einschließt.

7. Elektronisch kommutierter Elektromotor nach Anspruch 4, **dadurch gekennzeichnet, dass** der Nutgrund (9) eben ausgebildet ist, und die Seitenwände (10) zum Nutgrund (9) einen Winkel α im Bereich von 10° bis 60°, vorzugsweise von 30° einschließen.

8. Elektronisch kommutierter Elektromotor nach einem der Ansprüche 2 bis 7, **dadurch gekennzeichnet, dass** die Nut (8) eine Nuttiefe von 50 bis 400 Mikrometer aufweist.

9. Elektronisch kommutierter Elektromotor nach einem der Ansprüche 2 bis 8, **dadurch gekennzeichnet, dass** das Wälzlager (4) einen konzentrisch zum ersten Lagerring (5) angeordneten zweiten Lagerring (6) und mehrere zwischen erstem Lagerring (5) und zweitem Lagerring (6) angeordnete Wälzkörper (7) umfasst, wobei die Nut (8) in axialer Richtung betrachtet in der Mitte des Wälzlagers (4) angeordnet ist.

10. Elektronisch kommutierter Elektromotor nach Anspruch 9, **dadurch gekennzeichnet, dass** die Nut (8) mindestens so breit ist wie die Wälzkörper (7).

11. Elektronisch kommutierter Elektromotor nach einem der Ansprüche 7 bis 10, **dadurch gekennzeichnet, dass** die Breite des Nutgrunds (9) zwischen 60% und 100% der Breite der Wälzkörper (7) beträgt.

12. Elektronisch kommutierter Elektromotor nach einem der Ansprüche 1 bis 11, **dadurch gekennzeichnet, dass** der erste Lagerring (5) auf den jeweiligen Wellenstummel (13) aufgepresst ist.

13. Elektronisch kommutierter Elektromotor nach einem der Ansprüche 1 bis 12, **dadurch gekennzeichnet, dass** die Wellenstummel (13) mittels einer aus Metall bestehenden und den Rotormagneten umschließenden Hülse (15) mit dem Rotormagneten (14) verbunden sind.

14. Elektronisch kommutierter Elektromotor nach Anspruch 13, **dadurch gekennzeichnet, dass** zwischen Rotormagnet (14) und Hülse (15) ein Presssitz besteht, wobei die Wellenstummel (13) mit der Hülse (15) verschweißt sind.

15. Elektronisch kommutierter Elektromotor nach einem der Ansprüche 1 bis 12, **dadurch gekennzeichnet, dass** die Wellenstummel (13) mit dem Rotormagneten (14) verklebt sind.
